# EUROPÄISCHE PATENTSCHRIFT

(11) **EP 0 589 543 B1**
(45) Veröffentlichungstag und Bekanntmachung des Hinweises auf die Patenterteilung: **24.04.1996**
(21) Anmeldenummer: 93250180.2
(22) Anmeldetag: 21.06.1993
(51) Int. Cl.: B23Q 7/12, B65G 47/64, B07C 5/36

(54) **Vorrichtung zum Sortieren und Führen von Werkstücken**
Device for sorting and guiding of work pieces
Dispositif pour trier et mener des pièces

(30) Priorität: 23.09.1992 DE 4232584
(43) Veröffentlichungstag der Anmeldung: 30.03.1994
(73) Patentinhaber: MANNESMANN Aktiengesellschaft, D-40027 Düsseldorf (DE)
(72) Erfinder: Bertleff, Wolfgang, D-8560 Lauf a.d.P. (DE)
(74) Vertreter: Meissner, Peter E., Dipl.-Ing.

(56) Entgegenhaltungen:
- EP-A- 0 262 442
- EP-B- 0 010 597
- CH-A- 516 963
- DE-A- 1 905 543
- FR-A- 822 664
- GB-A- 2 180 497
- US-A- 1 616 151
- US-A- 4 422 815

## Beschreibung

Die Erfindung betrifft eine Vorrichtung zum Sortieren und im wesentlichen vertikalen Führen von Werkstücken, insbesondere von Kunststoffprodukten, die zwischen einer Produktionsmaschine und mindestens zwei nachgeschalteten Mitteln zum Produzieren, Fördern oder Lagern angeordnet ist, wobei die Sortier- und Führungsvorrichtung einen Trichter aufweist, der am Werkstückauslauf der Produktionsmaschine angeschlossen ist.

Zum Trennen und Sortieren von eine Produktionsmaschine vertikal verlassenden Werkstücken sind Sortierweichen bekannt. Solche Sortiervorrichtungen besitzen regelmäßig feste Wände, häufig aus metallischen Werkstoffen. In diese Vorrichtung hineinfallende Werkstücke erzeugen nicht nur ungewöhnlichen Lärm, sondern bei ihrem harten Auftreffen auf die festen Wände kann es zu Beschädigungen der Werkstücke kommen.

Eine Sortiereinrichtung mit den Merkmalen des Oberbegriffs des Patentanspruchs 1 ist aus der FR-A-822664 bekannt.

Aus der Schrift EP-PS 0 010 597 ist ferner eine Zuführrinne zum axialen Transport von stangenförmigem Material bekannt, die über die Länge der Rinne verteilte Bänder aufweist, die an beiden Enden beidseits der vertikalen Mitte des Rinnenquerschnitts an den Rinnenprofilsegmenten angelenkt sind. Aus dieser Schrift ist es bekannt, textile Bänder einzusetzen, die die einzeln ankommenden Werkstücke ohne bedeutsamen Aufprall ablegen.

Die bekannte Zuführrinne ist nur zum axialen Transport von stangenförmigem Material geeignet und weist keine Elemente zum Sortieren von Werkstücken auf.

Die Erfindung hat sich das Ziel gesetzt, eine gattungsgemäße Vorrichtung zu schaffen, bei der mit einfachen Mitteln, platzsparend und lärmreduziert, Werkstücke sortiert und mindestens zwei nachfolgenden Produktions-, Lager- oder Transporteinheiten schonend zugeführt werden.

Die Erfindung löst dieses gesetzte Ziel durch die kennzeichnenden Merkmale des Anspruches 1. Die Unteransprüche zeigen vorteilhafte Weiterbildungen der Erfindung. In den Bereich, in dem Werkstücke vertikal eine Produktionsmaschine verlassen, ist ein einfach befestigbarer Trichter angeordnet. Am Trichterauslauf ist ein um seine Zentralachse drehbarer Rahmen angeordnet. An den parallel zur Drehachse sich befindenden Schenkeln sind Bahnen befestigt, deren vom Drehrahmen wegweisendes Ende an Stangen angeordnet ist. Durch Drehung des Rahmens in einem Drehwinkelbereich von ± 5° um seine Zentralachse können diese Bahnen jeweils in der Weise gespannt werden, daß eine schiefe Ebene entsteht, über die die Werkstücke rutschend in nachfolgende Mittel, wie Produktions-, Lager- oder Transporteinheiten befördert werden.

Der Antrieb des Rahmens ist dabei mit einer Meß- und Regeleinrichtung verbunden, die in Abhängigkeit von vorgebbaren Meßergebnissen oder auch entsprechend einem Zufallsgenerator den Rahmen bewegt. Dabei ist der Rahmen in mindestens zwei Stellungen bewegbar, und zwar in einer solchen Weise, daß mindestens eine der parallel zur Drehachse angeordneten Mündungskanten geschlossen werden und die gegenüberliegende Kante zum Durchlaß der Werkstücke zum Band beabstandet ist. Der Drehwinkel zwischen den zwei genannten Einstellungen beträgt 270 bis 340°.

Darüber hinaus besteht die Möglichkeit einer dritten Position und damit eines weiteren Sortierkriteriums. Bei der Verwendung von nur zwei Bändern wird der Rahmen in horizontale Lage gebracht, so daß die Trichtermündung völlig offen ist und die Werkstücke vertikal durch den Rahmen fallen.

Bei der Verwendung eines dritten Bandes ist dieses in der Weise angeordnet, daß das den Rahmen abdeckende Band eine Schütte bildet. Bei dieser vorteilhaften Ausgestaltung fallen die Werkstücke auf das schüttenförmige Band, ihr Aufprall wird hier lärmgemindert gedämpft und anschließend rutschen sie entsprechend dem Winkel des Schüttenscheitels in die nachgeschalteten Einheiten.

Die erfindungsgemäße Vorrichtung läßt sich auch leicht bei vorhandenen Maschinen nachrüsten, da sie in einfacher Weise an den Produktionsmaschinen anbringbar ist. So reichen hierbei einfache Gewindebohrungen, daß beispielsweise ein Schweißen als Befestigungsart entfallen kann. Eine weitere Befestigungsart ist ein Fixieren mittels Magnetfüßen am Maschinenausfallschacht.

Darüber hinaus benötigt die vorgeschlagene Sortierweiche wenig Bauraum, so daß im Bereich der Produktionsmaschine ein großer Freiraum für Förderbänder, Transportbehälter oder ähnliches verbleibt.

Die gewichtsmäßig leichter und konstruktiv einfach aufgebaute Transport-und und Sortiervorrichtung läßt sich mit wenigen Handgriffen in den Werkstückausstoßbereich der Produktionsmaschine verschieben und somit optimal an die Fördererfordernisse anpassen.

Das sichere Fördern und Sortieren durch die vorgeschlagene Vorrichtung erlaubt ein teilegerechtes Fallteil-Handling, das durch flexible, dämmende Folie bzw. Gewebebahnen als Auftreff- und Gleitfläche ein äußerst schonendes Behandeln der Fallteile erlaubt.

Als Material der Gewebebahnen wird Teflon- bzw. Teflon-Glasgewebe vorgeschlagen. Bei der Verwendung von Teflon bzw. Teflon-Glasgewebebahnen als Auftreff- und Gleitfläche ergeben sich neben guten Gleiteigenschaften und hoher mechanischer Belastbarkeit bzw. Reißfestigkeit insbesondere durch die Glasgewebeeinlage noch hohe Temperaturbeständigkeiten. Die das geöffnete Werkzeug verlassenden Werkstücke können Temperaturen bis zu 300° aufweisen. Teflongewebe besitzt aber auch bei diesen hohen Temperaturen eine besondere Standfestigkeit und ist darüber hinaus geeignet, nach Erkalten der Kunststoffmasse ein leichtes Entfernen am Teflongewebe evtl. anbackender Spritzkuchen zu ermöglichen.Es können Bahnen einer Banddicke von ca. 0,25 mm zum Einsatz kommen, die bei hoher Flexibilität wartungsarm eine lange Lebensdauer aufweisen.

Beim Einsatz von Federwellen an den Festpunkten zur Straffung der Gewebebahnen läßt sich eine in weiten Bereichen variabel einstellbare Aufpralldämpfung der Werkstücke durch Verändern der Federspannung an der Federwelle erreichen. Die Federwellenvorspannung läßt sich dabei begrenzen, so daß Fehler durch nicht exaktes Justieren oder durch ein überlaufen des Antriebs ohne schädigende Wirkung für die Gewebebahnen, die Mechanik und den Antrieb eintreten können.

Mit einfachen Mitteln ist es möglich, bei Bedarf eine 2-Stellungs-Separierweiche umzurüsten in eine 3-Stellungs-Separierweiche.

Als Sortierkriterien bieten sich nicht nur "Gutteile" und "Schlechtteile", sondern auch "Prüfteile" an, die zu Mitteln, beispielsweise in Behälter oder auf Transportbänder geführt werden.

Weiterhin wird vorgeschlagen, endlos gemachte Gewebebahnen einzusetzen. Bei Verschmutzung oder Verschleiß kann das Gewebeband über die an den Schenkeln bzw. Stangen angeordnete Rollen weitergezogen werden.

Außerdem wird vorgeschlagen, am Trichter an der Trichtermündung zur Schüttrichtung schwenkbare Leitbleche einzusetzen. Hierdurch besteht eine Anpassungs- und Verwendungsmöglichkeit einer identischen Vorrichtung an mehreren Maschinen mit unterschiedlichen Abmessungen im Bereich des Ausfallschachtes durch veränderte Ausstellung der schwenkbaren Leitbleche.

Als Antrieb bietet sich ein elektromotorischer Antrieb über Schneckenradgetriebe an. Gegenüber pneumatischen Dreheinheiten bzw. Linearantrieben mit nachgeschalteter Umsetzung in Drehbewegung weist der Schneckenradantrieb nicht nur Kostenvorteile auf, durch seine weitgehende Selbsthemmung in den Endstellungen durch das Schneckenradgetriebe gewährleistet er auch einen geringeren Energiebedarf und darüber hinaus einen geräuscharmen Lauf.

Ein Beispiel der Erfindung ist in der beiliegenden Zeichnung dargestellt. Es zeigen
- Fig. 1: eine Sortierweiche mit drei Behältern in der Stellung "Aussortierung",
- Fig. 2: die Verwendung von drei Bahnen und die Sortierstellung "Hauptsortierung",
- Fig. 3: eine perspektivische Darstellung eines Schüttenbandes.

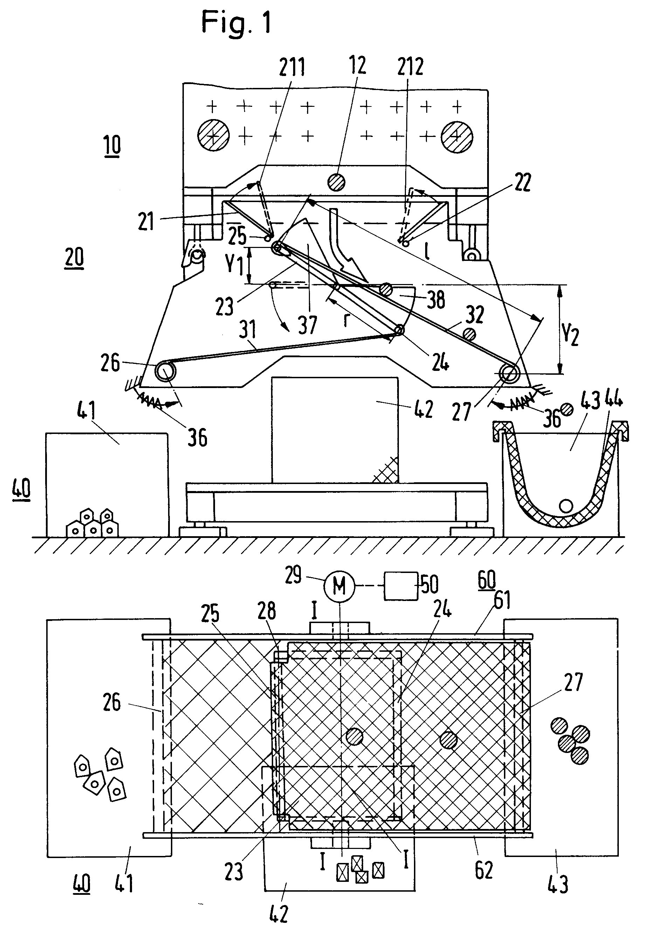

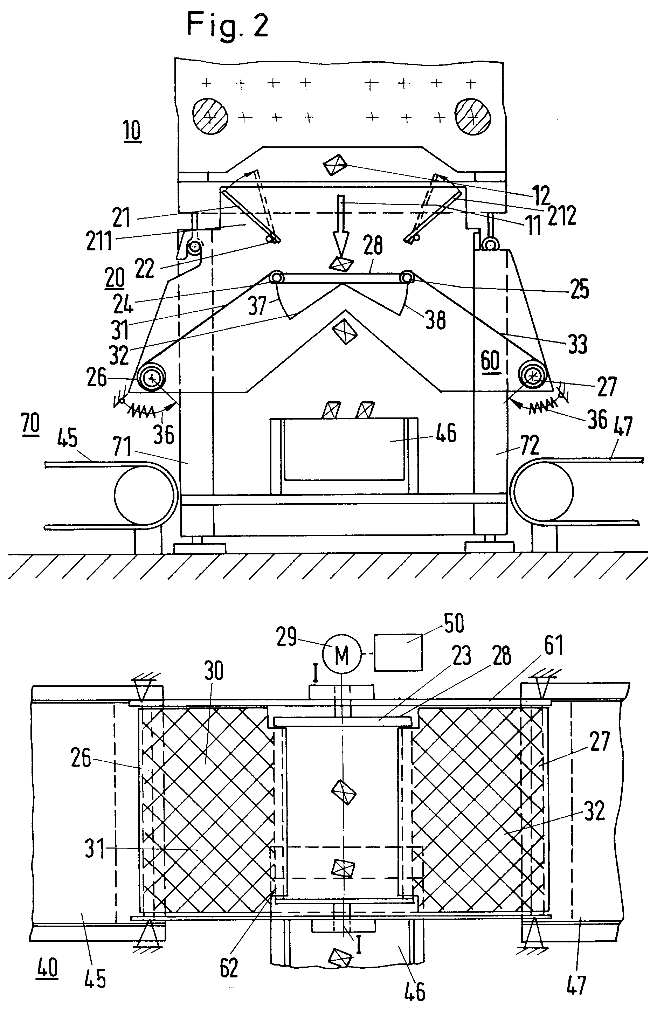

Die Fig. 1 und 2 zeigen dabei einen Teil einer Produktionsmaschine 10 mit einem Werkstückauslauf 11.

An der Produktionsmaschine 10 ist in Fallrichtung der Werkstücke 12 eine Sortier- und Führungsvorrichtung 20 lösbar befestigt. Die Vorrichtung 20 weist dabei einen Trichter 21 auf, der mit schwenkbaren Leitblechen 211 und 212 ausgerüstet ist. An der Trichtermündung 22 des Trichters 21 ist ein drehbarer Rahmen 23 angebracht. Der Rahmen 23 weist dabei parallel zu seiner Drehachse I angeordnete Schenkel 24 und 25 auf, die über Verbindungselemente 28 mit einem Antrieb 29 verbunden sind. Die Verbindungselemente 28 können dabei eine stangenförmige Form haben oder aus flächenförmigen Kreissegmenten bestehen, wobei die Kreissegmente 37 und 38 die jeweilige Offenstellung des drehbaren Rahmens seitlich abdecken.

In Förderrichtung der Werkstücke 12 unterhalb der Trichtermündung 22 und außerhalb von dieser sind Stangen 26 und 27 angeordnet. Zwischen den Schenkeln 24, 25 und den Stangen 26, 27 sind Bahnen 31 und 32 vorgesehen. Die Bahnen 31 bzw. 32 weisen dabei eine Länge l auf, die zwischen 2,3 bis 2,7 mal so groß ist wie der Radius r des drehbaren Rahmens 23. Der vertikale Abstand des Schenkels bzw. der Stangen zur Drehachse I verhält sich dabei wie y₁:y₂ = 0,4 bis 0,8. Hierdurch wird es möglich, bei geeigneter Straffung des Bandes einen optimalen Schüttwinkel zur Beförderung der Werkstücke zu erreichen. Die Bahnen werden in der Stellung "Aussortierung" soweit gespannt, daß bei eingestellter Winkelstellung, in der sich der Schenkel 24 oder 25 in Nähe der Trichtermündung 22 befindet, der jeweils gegenüberliegende Schenkel 25 oder 24, auch bei einem Aufprall von Werkstücken 12 auf das Band nicht berührt wird.

Die Bahnen 31, 32 können auch über Spannelemente 36 einstellbar gestrafft werden. In der Figur sind diese Spannelemente 36 in Form von an den Stangen 26, 27 angebrachten Federwellen angedeutet.

Die Werkstücke 12 werden Mitteln 40 zugeführt, die in der Fig. 1 als Behälter 41 bis 43 ausgebildet sind. Zur weiteren Minderung des Lärms ist im Behälter 43 eine zusätzliche Schalldämmung 44, hier in Form eines Bandes, vorgesehen.

Der Antrieb 29 des drehbaren Rahmens 23 ist mit einer nicht näher beschriebenen Meß- und Regeleinrichtung 50 steuerungstechnisch verbunden.

In der Fig. 1 ist die Halterung des beweglichen Rahmens 23 sowie der Stangen 26 und 27 in Form von Seitenwangen 61 und 62 einer Halterung 60 dargestellt, die unmittelbar an den Trichter 21 befestigt ist. Es läßt sich aber die Sortierungsvorrichtung 20 durchaus als Standvorrichtung ausführen, wobei der Trichter 21 unabhängig hiervon an der Produktionsmaschine angeordnet ist. Ein leichtes Umsetzen, beispielsweise auch ein Drehen um 90°, wäre hierdurch einfach möglich.

In der Fig. 1 ist die Situation dargestellt, bei der die Werkstücke 12 über die Bahn 32 in den Behälter 43 gelenkt werden. Der Behälter 43 könnte z.B. zur Aufnahme der "Schlechtteile" dienen, während in dem Behälter 41 die "Prüfteile" und in dem Behälter 42 die "Gutteile" befördert werden.

Die Fig. 2 zeigt den Drehrahmen 23 in horizontaler Position, so daß Werkstücke 12 unmittelbar auf ein Förderband 46 anstelle des in der Fig. 1 dargestellten Behälters 42 fallen können. Im Unterschied zur Fig. 1 sind hier als Beispiele zwei weitere Förderbänder 45, 47 als Transportmittel zum Wegfördern von Werkstücken eingesetzt.

Weiterhin ist hier die Halterung des Rahmens 23 und der Stangen 26 und 27 dargestellt, die konstruktiv in der Form eines auf dem Boden abstellbaren Gestells 70 mit den Schenkeln 71 und 72 möglich ist. Weiterhin sind die Verbindungselemente 28 zu den Schenkeln 24 und 25 in Form von Viertelkreisscheiben 37, 38 ausgeführt.

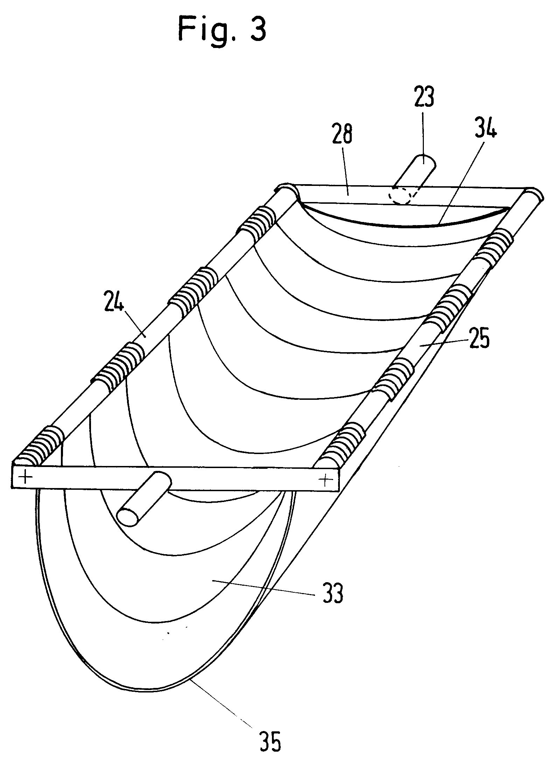

Die Fig. 3 zeigt einen drehbaren Rahmen 23, an dem ein Band 33 zusätzlich zu den in den Fig. 1 und 2 dargestellten Bahnen 31 und 32 befestigt ist. Das Band 33 ist in Form einer Schütte ausgebildet und besitzt eine kurze Kante 34 und eine längere Kante 35, wie in der perspektivischen Skizze dargestellt. Das Band 33 umschlingt die Schenkel 24, 25 nur in Teilbereichen, so daß für die Bahnen 31 und 32 Befestigungsmöglichkeiten verbleiben.

## Patentansprüche

1. Vorrichtung zum Sortieren und im wesentlichen vertikalen Führen von Werkstücken, insbesondere von Kunststoffprodukten, die zwischen einer Produktionsmaschine und mindestens zwei nachgeschalteten Mitteln zum Produzieren, Fördern oder Lagern angeordnet ist,
wobei
die Sortier- und Führungsvorrichtung (20) einen Trichter (21) aufweist, der am Werkstückauslauf (11) der Produktionsmaschine (10) angeschlossen ist, dadurch gekennzeichnet,
daß an der Mündung (22) des Trichters (21) ein um eine Horizontalachse (I) drehbarer Rahmen (23) vorgesehen ist, dessen Drehachse (I) horizontal mit der Trichtermündung (22) fluchtet, daß an dem parallel zur Drehachse (I) sich befindenden Schenkel (24, 25) des drehbaren Rahmens (23) die einen Enden der Bahnen (31, 32) anlenkbar sind und deren jeweiliges andere Ende am parallel zu den Schenkeln (24, 25) des drehbaren Rahmens (23) geführten, von der Trichtermündung (22) distanzierten Stangen (26, 27) befestigbar sind und dabei eine Länge aufweisen, bei dem in einem Drehwinkelbereich von ± 5° die Bahnen (31 und 32) soweit straffbar sind, daß sie in Arbeitsstellung oberhalb der zugeordneten Schenkel (24 oder 25), an denen sie nicht befestigt sind, verlaufen und dabei die Trichtermündung (22) unterfüllen.

2. Vorrichtung nach Anspruch 1,
dadurch gekennzeichnet,
daß die Länge (l) der Bahnen (31, 33) sich zum Radius (r) des drehbaren Rahmens (23) verhält wie l:r 2,3 bis 2,7, bei Y₁:Y₂ = 0,4 bis 0,8,
wobei Y₁ den vertikalen Abstand des Schenkels (24 oder 25) in Schließstellung des drehbaren Rahmens (23) und Y₂ den vertikalen Abstand der Stege (26 bis 27) zur Drehachse (I) bezeichnet.

3. Vorrichtung nach Anspruch 2,
dadurch gekennzeichnet,
daß die Bahnen (31 bis 33) Gewebebahnen aus reißfestem, flexiblem Kunststoff sind, z. B. Teflongewebe bzw. Teflonglasgewebe.

4. Vorrichtung nach Anspruch 3,
dadurch gekennzeichnet,
daß die Bahnen (31, 33) als endlose durch die Schenket (24 bzw. 25) und die Stangen (27 bzw. 26) umgelenkte Gewebebahnen ausgebildet sind.

5. Vorrichtung nach Anspruch 1,
dadurch gekennzeichnet,
daß an den Schenkeln (24, 25) und/oder den Stangen (26, 27) zur Straffung der Bahnen (31, 33) Spannelemente (36) vorgesehen sind, z.B. in Form von Federwellen.

6. Vorrichtung nach Anspruch 1,
dadurch gekennzeichnet,
daß zwischen den Schenkeln (24, 25) des drehbaren Rahmens (23) ein Band (42) vorgesehen ist, das eine Schütte bildend an seinen freien Kanten (34, 35) unterschiedliche Längen aufweist.

7. Vorrichtung nach Anspruch 1,
dadurch gekennzeichnet,
daß am drehbaren Rahmen (23) ein Antrieb (29) angeschlossen ist, der mit einer Meß- und Regeleinrichtung (50) der Produktionsmaschine (10) steuerungstechnisch verbunden ist.

8. Vorrichtung nach Anspruch 7,
dadurch gekennzeichnet,
daß der Antrieb (29) ein elektromotorischer Schneckenantrieb ist.

9. Vorrichtung nach Anspruch 1,
dadurch gekennzeichnet,
daß am Trichter (21) an der Trichtermündung (22) in Schüttrichtung schwenkbare Leitbleche (211 und 212) angeordnet sind.

## Claims

1. Device for sorting and guiding workpieces, substantially vertically, products made of synthetic material in particular, which is disposed between a production machine and at least two connected means, after it, for production, conveying and support bearing, whereby a sorting and guiding device (20) has a funnel (21) which is connected to a workpiece outlet (11) of a production machine (10),
characterized in that
a frame, which can rotate about a horizontal axis (I), is provided on an opening (22) of a funnel (21), a rotation axis (I) of which runs, horizontally in relation to a said funnel opening (22) and one end of webs (31, 32) can be articulated on a side piece (24, 25), of a rotating frame (23), parallel to an axis of rotation (I), second ends of said webs being attached to bars (26, 27) directed parallel to side-pieces (24, 25) of a rotating frame (23) and separated from a funnel opening (22), these webs (31, 32) thereby having a length for which, with a range of angle of rotation of ± 5°, webs (31 and 32) can be set under tension to an extent whereby they run, in an operational position, above an associated side piece (24 or 25), to which they are not attached, and thereby do underfill a funnel opening (22).

2. Device in accordance with claim 1,
characterized in that
length (l) of webs (31, 33) is in a ratio to a radius (r) of a rotating frame (23) of l:r = 2.3 to 2.7, where Y₁, Y₂ = 0.4 to 0.8, whereby a vertical separation of a side piece (24 or 25) in a closing position of a rotating frame (23) concerned and Y₂ is a vertical separation of webs (26 to 27) from an axis of rotation (I).

3. Device in accordance with claim 2,
characterized in that
webs (31 to 33) are fabric webs made of tear-resistant, flexible synthetic material, teflon-fabric or teflon-glass fabric for example.

4. Device in accordance with claim 3,
characterized in that
webs (31, 33) are developed as endless fabric webs guided round by means of sides pieces (24 and/or 25) and bars (27 and/or 26).

5. Device in accordance with claim 1,
characterized in that
tensioning elements (36), on side pieces (24, 25), and/or bars (26, 27) for tensioning webs (31, 33), are provided, as flexible spindles.

6. Device in accordance with claim 1,
characterized in that
a belt (42) is provided between side pieces (24, 25) of a rotating frame (23), a said belt forming at its free ends (34, 35), a chute of variable length.

7. Device in accordance with claim 1,
characterized in that a drive (29) is connected onto a rotating frame (23), a said drive being controllably connected to a measuring and adjustment device (50) of a production machine (10).

8. Device in accordance with claim 7,
characterized in that
the drive (29) is an electric-motor worm drive.

9. Device in accordance with claim 1,
characterized in that
baffle plates (211 and 212) pivotable in the pouring direction are arranged on the funnel (21) at the opening (22) of the funnel.

## Revendications

1. Dispositif pour trier et guider de façon généralement verticale des pièces, en particulier des produits en matière synthétique, qui est agencé entre une machine de production et au moins deux moyens disposés en aval pour la production, le transport ou la mise en dépôt, le dispositif de triage et de guidage (20) présentant une trémie (21) qui est raccordée à la sortie des pièces (11) de la machine de production (10),
caractérisé en ce que, à l'embouchure (22) de la trémie (21), il est prévu un cadre (23) pouvant tourner autour d'un axe horizontal (I) dont l'axe de rotation (I) est aligné horizontalement avec l'embouchure (22) de la trémie, en ce que, sur la branche (24,25), s'étendant parallèlement à l'axe de rotation (I), du cadre rotatif (23), sont articulées des premières extrémités des voies (31,32), dont les autres extrémités peuvent être fixées sur des barres (26,27) à distance de l'embouchure (22) de la trémie et guidées parallèlement aux branches (24,25) du cadre rotatif (23), et présentent de plus une longueur pour laquelle les voies (31 et 32) peuvent être tendues dans une zone d'angle de rotation de ± 5°, de sorte que, en position de travail, elles s'étendent au-dessus des branches associées (24 ou 25), auxquelles elles ne sont pas fixées, et, de plus, couvrent l'embouchure (22) de la trémie.

2. Dispositif selon la revendication 1,
caractérisé en ce que la longueur (l) des voies (31,33), par rapport au rayon (r) du cadre rotatif (23), est dans la proportion de l:r 2,3 à 2,7, pour Y₁:Y₂ = 0,4 à 0,8, Y₁ désignant l'écartement vertical de la branche (24 ou 25) dans la position de fermeture du cadre rotatif (23) et Y₂ l'écartement vertical des barres (26 ou 27) par rapport à l'axe de rotation (I).

3. Dispositif selon la revendication 2,
caractérisé en ce que les voies (31 à 33) sont des bandes textiles en matière synthétique souple et résistant au déchirement, par exemple un tissu de Téflon ou un tissu de verre Téflon.

4. Dispositif selon la revendication 3,
caractérisé en ce que les voies (31,33) sont réalisées sous forme de bandes textiles sans fin renvoyées par les branches (24 ou 25) et les barres (27 ou 26).

5. Dispositif selon la revendication 1,
caractérisé en ce que des éléments de tension (36) sont prévus sur les branches (24, 25) et/ou les barres (26,27) pour raidir les voies (31,33), par exemple sous forme d'ondulations élastiques.

6. Dispositif selon la revendication 1,
caractérisé en ce que, entre les branches (24,25) du cadre rotatif (23), il est prévu une bande (42) qui, formant une glissière, présente des longueurs différentes à ses bords libres (34,35).

7. Dispositif selon la revendication 1,
caractérisé en ce qu'un entraînement (29) est raccordé au cadre rotatif (23), lequel entraînement est relié, par une technique de commande, à un dispositif de mesure et de réglage (50) de la machine de production (10).

8. Dispositif selon la revendication 7,
caractérisé en ce que l'entraînement (29) est un entraînement à vis sans fin électromotorisé.

9. Dispositif selon la revendication 1,
caractérisé en ce que des chicanes pouvant pivoter dans la direction de déversement (211 et 212) sont agencées sur la trémie (21) à l'embouchure (22) de la trémie.
